# EUROPÄISCHE PATENTANMELDUNG

(11) **EP 2 056 535 A2**
(43) Veröffentlichungstag der Anmeldung: **06.05.2009**
(21) Anmeldenummer: 08018731.3
(22) Anmeldetag: 27.10.2008
(51) Int. Cl.: H04L 12/46, H04L 29/06

(54) **Verbinder und Verfahren zum Bereitstellen eines Zugangs zu einem Datenverarbeitungsnetz für eine Datenverarbeitungseinrichtung**

(30) Priorität: 01.11.2007 DE 102007052523
(71) Anmelder: Phoenix Contact GmbH & Co. KG, 32825 Blomberg (DE)
(72) Erfinder: Kalhoff, Johannes, 32825 Blomberg (DE)
(74) Vertreter: Blumbach - Zinngrebe

(57) **Zusammenfassung**

Die Erfindung betrifft einen Verbinder (110) sowie ein Verfahren zum Bereitstellen eines Zugangs zu einem Datenverarbeitungsnetz (300) für Datenverarbeitungseinrichtung (200), wobei ein individueller, dezentraler und gesicherter Zugang zu einem Datenverarbeitungsnetz (300) bereitgestellt wird und wobei ein Datenaustausch zwischen der Einrichtung (200) und dem Netz (300) erst dann ermöglicht bzw. gewährt wird, wenn die Einrichtung (200) wenigstens ein vorbestimmtes Identifikationsmerkmal (125,225) besitzt. Ferner bezieht sich die Erfindung auf ein Verfahren zur Konfiguration des erfindungsgemäßen Verbinders (100).

## Beschreibung

Die Erfindung betrifft einen Verbinder sowie ein Verfahren zum Bereitstellen eines Zugangs zu einem Datenverarbeitungsnetz für eine Datenverarbeitungseinrichtung. Ferner bezieht sich die Erfindung auf ein Verfahren zur Konfiguration des Verbinders.

Datenverarbeitungsnetze mit Multimaster-Funktionalität, insbesondere basierend auf dem Ethernet-Standard, werden mittlerweile auch in der automatisierten industriellen Fertigung, zum Beispiel für die Vernetzung von Feldgeräten, eingesetzt.

In Abhängigkeit von den in einem Netz auf den verschiedenen Schichten des OSI-Referenzmodells der ISO verwendeten Protokollen, besitzen die an das Netz angeschlossenen Einrichtungen in der Regel mehrere verschiedenartige Identifikationsmerkmale wie zum Beispiel eine MAC- oder IP-Adresse oder einen Hostnamen. Dabei ist es für einen problemlosen Datenaustausch zwischen den Einrichtungen von wesentlicher Bedeutung, dass den Einrichtungen in einem Netz die Identifikationsmerkmale derart zugewiesen wurden, dass diese jeweils nur einmal in dem Netz vorkommen und somit eine eindeutige Identifikation und Adressierung jeder einzelnen Einrichtung erlauben. Es versteht sich dabei, dass je nach Betrachtungsweise, ein Netz technisch und/oder organisatorisch aus mehreren Teilnetzen, Netzsegmenten bzw. Netzbereichen bestehen kann, jeder Netzbereich für sich aber wiederum auch ein Netz darstellt.

Im Bereich der automatisierten industriellen Fertigung erfolgt die Zuweisung der einzelnen Identifikationsmerkmale in der Regel manuell, wobei die Identifikationsmerkmale jeweils auf der Einrichtung remanent gespeichert werden.

Auf diesen Identifikationsmerkmalen bauen auch die Schutzmechanismen einer sogenannten Firewall auf. Eine solche ist zumeist eine sehr komplex aufgebaute Einrichtung, die an zentralen Verbindungsstellen zwischen Netzen mit unterschiedlichen Vertrauenstufen eingesetzt wird und dem Schutz eines Netzes und der darin vorhandenen Ressourcen wie zum Beispiel Geräte, Dienste oder Daten vor unerwünschten Zugriffen von Einrichtungen aus anderen Netzen dient. Dafür sichert eine Firewall einen zentralen Zugang zu einem Netz, indem sie an dieser Stelle den Datenaustausch vor allem anhand der als Absender und Ziel eines Datentelegramms angegebenen Identifikationsmerkmale überprüft und gegebenenfalls verhindert.

Eine Firewall kann ein Netz und dessen Ressourcen jedoch nicht vor Gefahren schützen, die von einer Einrichtung, wie etwa einem Service-Laptop, ausgehen können, die, wenn auch nur zeitweise, direkt an dieses Netz selbst, d. h. hinter der Firewall, angeschaltet wird.

So besteht beispielsweise die Gefahr, dass der Datenaustausch innerhalb eines durch eine Firewall geschützten Netzes erheblich gestört wird oder gar zum Erliegen kommt, weil nach dem Anschalten einer Einrichtung, die zuvor in einem anderen Netz im Einsatz war, nunmehr gleiche Identifikationsmerkmale mehrfach auftreten.

Im Bereich der automatisierten industriellen Fertigung wird eine Firewall beispielsweise oberhalb einer Zellsteuerung installiert, um die gesamte dahinter liegende Zelle zu schützen.

Wenn zum Beispiel in einer Notsituation ein defektes Gerät in einer solchen Zelle durch ein gleichartiges Gerät aus einer anderen Zelle ersetzt wird und eine Überprüfung und gegebenenfalls eine Änderung der auf dem Gerät gespeicherten Identifikationsmerkmale aus Zeitmangel und/oder Unachtsamkeit unterbleibt, besteht die Gefahr, dass es zum mehrfachen Auftreten gleicher Identifikationsmerkmale und damit zur Störung oder zum Erliegen des gesamten Datenaustauschs in dieser Zelle kommt.

Gleiche Identifikationsmerkmale können auch dann mehrfach auftreten, wenn etwa im Zuge der Wartung oder Reparatur eines an ein Netz angeschlossenen Gerätes durch einen Service-Technier ein mobiler Service-Laptop zeitweise ebenfalls an dieses Netz angeschaltet wird, ohne dass der Service-Techniker zuvor die auf dem Service-Laptop gespeicherten Identifikationsmerkmale überprüft und gegebenenfalls geändert hat.

Ein nur noch eingeschränkt oder gar nicht mehr möglicher Datenaustausch in einem Netz bzw. einer Zelle hat im Bereich der automatisierten industriellen Fertigung negative Auswirkungen auf die Reaktionszeit bzw. Verfügbarkeit von Maschinen, Anlagenteilen oder ganzen Anlagen, wodurch es zu geringerer Qualität oder zu Schäden an den hergestellten Produkten kommen kann. Ferner sind auch Schäden an den Maschinen bzw. Anlagen sowie ein Ausfall der Produktion möglich. Im schlimmsten Fall kann darüber hinaus von derart beeinträchtigten Maschinen oder Anlagen auch Gefahr für Leib und Leben ausgehen.

Eine Aufgabe der Erfindung ist es daher, eine Möglichkeit zu schaffen, um ein Datenverarbeitungsnetz, das zwar an einer zentralen Verbindungs- bzw. Zugangsstelle durch eine Firewall geschützt sein kann, auf einfache Weise vor Gefahren zu schützen, die von einer

Datenverarbeitungseinrichtung ausgehen können, die, gegebenenfalls unter Umgehung jener zentralen durch eine Firewall geschützten Zugangsstelle, direkt und dezentral an das Netz selbst anzuschalten ist, insbesondere vor dem mehrfachen Auftreten gleicher Identifikationsmerkmale in dem Netz.

Die erfindungsgemäße Lösung des oben genannten Problems ist durch einen Verbinder sowie zwei Verfahren mit den Merkmalen des jeweiligen unabhängigen Anspruchs gegeben.

Vorteilhafte und/oder bevorzugte Ausführungsformen und Weiterbildungen sind Gegenstand der jeweiligen abhängigen Ansprüche.

Ein Kerngedanke der Erfindung besteht darin, einen mobilen Verbinder bereitzustellen, mittels dem eine Datenverarbeitungseinrichtung an einer beliebigen Stelle an ein Datenverarbeitungsnetz angeschaltet werden kann, wobei der Verbinder auf einfache Weise das Netz vor Gefahren schützt, die von der Einrichtung bei einem unachtsamen jedoch nicht böswilligen Vorgehen ausgehenden können.

Erfindungsgemäß ist somit ein Verbinder zum Bereitstellen eines Zugangs zu einem Datenverarbeitungsnetz, insbesondere einem Multimaster-fähigen, Ethernet-basierten Datenverarbeitungsnetz in der automatisierten industriellen Fertigung, für eine an das Netz anzuschaltende Datenverarbeitungseinrichtung vorgesehen, der dafür über zwei Verbindungseinrichtungen verfügt, mit welchen die Einrichtung bzw. das Netz verbunden werden. Gekennzeichnet ist der Verbinder dadurch, dass er mobil, d.h. ortsungebunden und transportabel, und zum Bereitstellen eines individuellen, dezentralen und gesicherten Zugangs zu einem Datenverarbeitungsnetz ausgebildet ist und ferner über eine Verarbeitungseinheit verfügt. Die Verarbeitungseinheit ist dazu ausgebildet, nach Anschalten der Einrichtung diese zunächst auf wenigstens ein vorbestimmtes Identifikationsmerkmal hin zu überprüfen und erst bei Erkennen wenigstens eines vorbestimmten Identifikationsmerkmals gemäß wenigstens einem, diesem Identifikationsmerkmal zugeordneten Berechtigungsmerkmal die zwei Verbindungseinrichtungen miteinander zu verbinden und einen Datenaustausch zwischen der Einrichtung und dem Netz zu ermöglichen.

Ein erfindungsgemäßes Verfahren zum Bereitstellen eines Zugangs zu einem Datenverarbeitungsnetz für eine an das Netz anzuschaltende Datenverarbeitungseinrichtung, wobei ein individueller, dezentraler und gesicherter Zugang zu dem Datenverarbeitungsnetz bereitgestellt wird, umfasst neben dem Bereitstellen eines erfindungsgemäßen Verbinders weitere Verfahrensschritte. So ist der erfindungsgemäße Verbinder an beliebiger Stelle mit dem Netz und der Einrichtung zu verbinden. Des Weiteren wird zumindest aus dem ersten Datentelegramm, welches von der Einrichtung ausgesendet wurde, wenigstens ein die Einrichtung identifizierendes Merkmal ausgelesen. Ferner wird das ausgelesene Identifikationsmerkmal mit wenigstens einem vorbestimmten Identifikationsmerkmal verglichen. Nur bei Erkennen einer Übereinstimmung wird der Datenaustausch zwischen der Einrichtung und dem Netz gemäß wenigstens einem, diesem Identifikationsmerkmal zugeordneten Berechtigungsmerkmal gewährt.

Ein erfindungsgemäßes Verfahren zum Konfigurieren des erfindungsgemäßen Verbinders umfasst als Verfahrensschritte das Festlegen von wenigstens einem eindeutigen Identifikationsmerkmal für eine an das Netz anzuschaltende Einrichtung und das Zuordnen von wenigstens einem bestimmten Berechtigungsmerkmal zu dem wenigstens einen Identifikationsmerkmal. Ferner werden diese Konfigurationsdaten anschließend auf den erfindungsgemäßen Verbinder übertragen.

Ein wesentlicher Vorteil der Erfindung ist folglich darin zu sehen, dass auf einfache Weise eine Datenverarbeitungseinrichtung an beliebiger Stelle an ein Netz anschaltbar ist, wobei durch einen entsprechend konfigurierten erfindungsgemäßen Verbinder auf einfache und somit auch kostengünstige Weise flexibel sichergestellt wird, dass, insbesondere bei einem unachtsamen jedoch nicht böswilligen Vorgehen, die Einrichtung nur solche Identifikationsmerkmale besitzt, die kein weiteres Mal in dem Netz auftreten, so dass das Netz vor den Gefahren, die ein doppeltes Auftreten von gleichen Identifikationsmerkmalen zur Folge haben kann, geschützt wird.

Um ferner zu verhindern, dass, etwa von einem Service-Laptop aus, welcher erfindungsgemäß an ein Netz angeschaltet wurde, ein Service-Techniker versehentlich ein Kommando an ein falsches Gerät oder ein Kommando per Broadcast an alle Geräte in diesem Netz sendet, ist gemäß einer bevorzugten Ausführungsform die Verarbeitungseinheit des Verbinders dazu ausgebildet, erst bei Erkennen wenigstens eines vorbestimmten Identifikationsmerkmals den Datenaustausch zwischen der angeschalteten Einrichtung und lediglich wenigstens einer bestimmten Ressource in dem Netz, welche anhand wenigstens eines Identifikationsmerkmals festgelegt ist, zu ermöglichen.

In einer weiteren besonders bevorzugten Ausführungsform ist die Verarbeitungseinheit des Verbinders ferner dazu ausgebildet, erst bei Erkennen wenigstens eines vorbestimmten Identifikationsmerkmals das Übertragen von lediglich wenigstens einem bestimmten Kommando innerhalb des Datenaustausch zu ermöglichen. Hierdurch ist auf einfache Weise sichergestellt, dass beispielsweise von einem erfindungsgemäß an ein Netz angeschalteten Service-Laptop aus ein Service-Techniker nicht versehentlich ein falsches Kommando an ein Gerät in diesem Netz sendet, wodurch dieses erheblich gestört werden könnte.

In Abhängigkeit von der Komplexität der anwendungsspezifisch zu überprüfenden Identifikationsmerkmale und/oder der zu überwachenden Berechtigungsmerkmale sind sowohl Ausführungsformen des Verbinders vorgesehen, bei denen die Verarbeitungseinheit wenigstens ein Schieberegister und wenigstens einen Vergleicher umfasst als auch Ausführungsformen, bei denen die Verarbeitungseinheit ergänzend oder alternativ einen Prozessor umfasst.

Praktischer Weise verfügt der Verbinder gemäß einer weiteren Ausführungsform über eine Anzeigeeinrichtung, die dazu ausgebildet ist, das Vorhandensein wenigstens eines nicht vorbestimmten Identifikationsmerkmals anzuzeigen.

In einer anderen Ausführungsform ist die Anzeigeeinrichtung des Verbinders ferner dazu ausgebildet, wenigstens ein vorbestimmtes Identifikationsmerkmal anzuzeigen, so dass beispielsweise ein Service-Techniker weiß, welches wenigstens eine Identifikationsmerkmal er einem an ein Netz anzuschaltenden mobilen Service-Laptop zuweisen muss, damit ein Datenaustausch mit dem Netz möglich ist.

Entsprechend einer vorteilhaften Implementierung des Verbinders ist die Verarbeitungseinheit dazu ausgebildet, bei wiederholtem Erkennen eines versuchten Datenaustauschs mit wenigstens einer Ressource in dem Netz und/oder eines versuchten Übertragens von wenigstens einem Kommando, ausgehend von einer an das Netz angeschalteten Einrichtung, die zwar wenigstens ein vorbestimmtes Identifikationsmerkmal besitzt, welchem jedoch kein entsprechendes Berechtigungsmerkmal zugeordnet ist, jeglichen weiteren Datenaustausch zwischen der Einrichtung und dem Netz zumindest temporär zu blockieren.

Insbesondere ist die Verarbeitungseinheit des Verbinders dazu ausgebildet, als Identifikationsmerkmale von Datenverarbeitungseinrichtungen MAC- und/oder IP-Adressen und/oder Hostnamen zu verarbeiten.

Ferner ist neben einer Ausführungsform des Verbinders zum kabelgebundenen Verbinden einer Datenverarbeitungseinrichtung mit einem Netz eine andere Ausführungsform zum kabellosen Verbinden einer Einrichtung mit einem Netz vorgesehen, wobei die Verbindungseinrichtung jeweils in entsprechend geeigneter Weise ausgebildet ist.

Gemäß einer weiteren Ausführungsform des Verbinders ist eine Schnittstelle, insbesondere eine USB-Schnittstelle, vorgesehen, über welche die benötigte Betriebsspannung von einer intern oder extern direkt angebundenen Stromquelle oder von einer extern indirekt angebundenen Stromquelle, insbesondere einer Datenverarbeitungseinrichtung, bereitstellbar ist.

Bevorzugt ist ferner vorgesehen, dass der Verbinder einen Speicher umfasst, in welchem wenigstens ein vorbestimmtes Identifikationsmerkmal sowie wenigstens ein dem Identifikationsmerkmal zugeordnetes Berechtigungsmerkmal gespeichert sein kann, in Abhängigkeit welcher die Verarbeitungseinheit des Verbinders den Datenaustausch ermöglicht.

Zweckmäßiger Weise umfasst der Verbinder ferner eine Empfangseinrichtung zum Empfangen von vorbestimmten Identifikationsmerkmalen und den Identifikationsmerkmalen zugeordneten Berechtigungsmerkmalen, die im Zuge einer Konfiguration des Verbinders von einer externen Einrichtung übertragen werden, wobei die Empfangseinrichtung mit dem Speicher, der einen Verbindungseinrichtung und/oder der Schnittstelle verbunden sein kann.

Anstelle der Empfangseinrichtung oder auch zusätzlich zu dieser umfasst der Verbinder in einer weiteren Ausführungsform eine Eingabeeinrichtung zum Eingeben von vorbestimmten Identifikationsmerkmalen und den Identifikationsmerkmalen zugeordneten Berechtigungsmerkmalen, wobei die Eingabeeinrichtung zweckmäßig mit dem Speicher verbunden ist.

Diese und weitere Merkmale sowie weitere damit einher gehende Vorteile der Erfindung ergeben sich aus der nachfolgenden näheren Beschreibung eines bevorzugten Ausführungsbeispiels unter Bezugnahme auf die beigefügten Zeichnungen.

In den Zeichnungen zeigen:

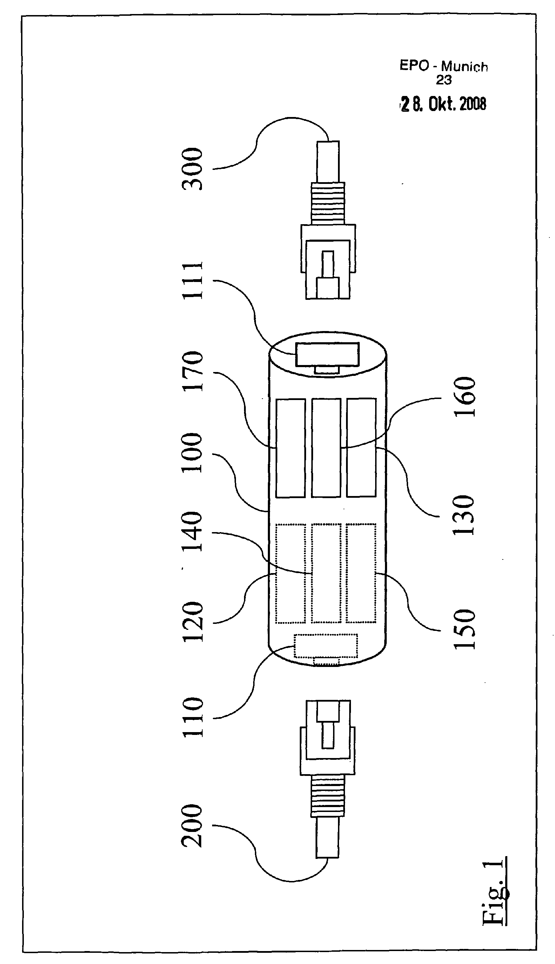

- Fig. 1: eine beispielhafte vereinfachte Darstellung des erfindungsgemäßen Verbinders zum Bereitstellen eines dezentralen und individuellen gesicherten Zugangs zu einem Datenverarbeitungsnetz für eine an das Netz anzuschaltende Datenverarbeitungseinrichtung.

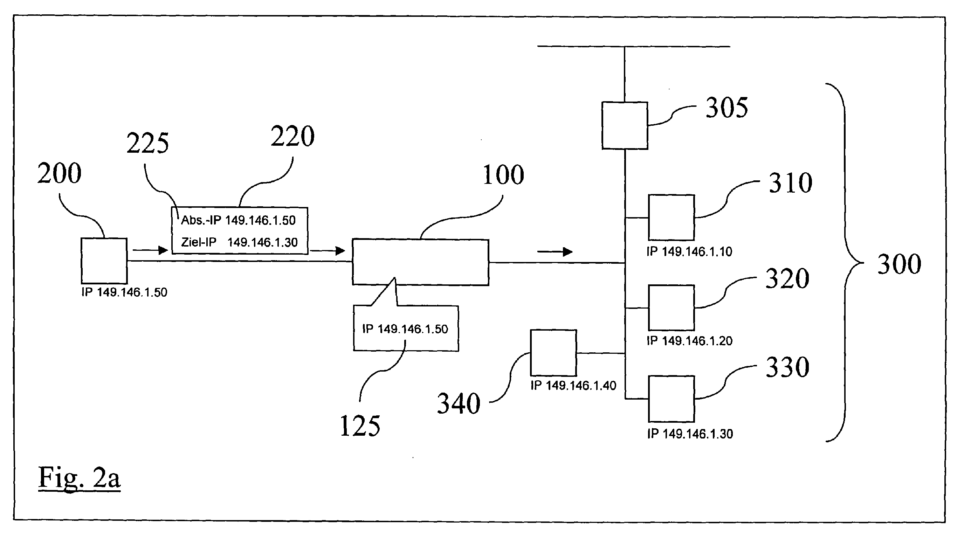

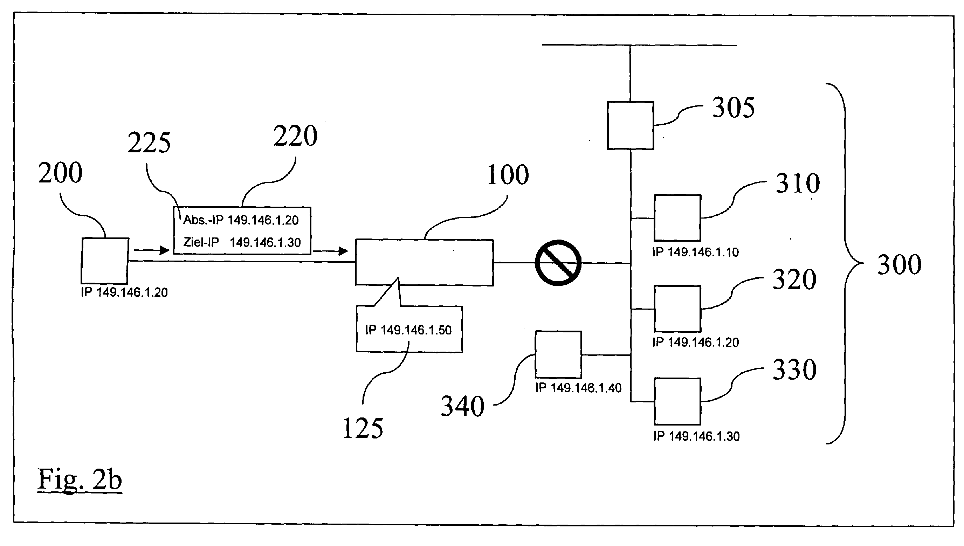

- Fig. 2a und 2b: eine beispielhafte schematische Darstellung eines erfindungsgemäßen Verbinders, mittels dem eine Datenverarbeitungseinrichtung an ein Datenverarbeitungsnetz angeschaltet ist, das an der zentralen Verbindungsstelle zu einem anderen Netz durch eine Firewall geschützt wird, wobei ein Datenaustausch zwischen der Einrichtung und dem Netz in Abhängigkeit des Erkennen einen vorbestimmten Identifikationsmerkmals durch den Verbinder gewährt (Fig. 2a) bzw. nicht gewährt (Fig. 2b) wird.

Figur 1 zeigt einen erfindungsgemäßen mobilen Verbinder 100, dessen Verbindungseinrichtung 110 mit einer Datenverarbeitungseinrichtung 200 und dessen Verbindungseinrichtung 111 mit einem Netz 300 verbunden werden kann. Die Verbindungseinrichtungen 110 und 111 sind in diesem dargestellten Beispiel entsprechend der Normung RJ-45 ausgeführt, wie sie bei Ethernet-basierten Datenverarbeitungsnetzen erforderlich sind.

Ferner weist der Verbinder 100 eine Verarbeitungseinheit 120 sowie einen Speicher 140 auf, wobei die Verarbeitungseinheit dazu dient, nach dem Anschalten der Einrichtung 200 diese zunächst auf das Vorhandensein wenigstens eines vorbestimmten Identifikationsmerkmals 125 (vgl. Fig. 2a und 2b), welches zusammen mit wenigstens einem diesem zugeordneten Berechtigungsmerkmal in dem Speicher 140 gespeichert ist, hin zu überprüfen und erst bei Erkennen wenigstens eines vorbestimmten Identifikationsmerkmals 125, 225 gemäß dem wenigstens einen zugeordneten Berechtigungsmerkmal die zwei Verbindungseinheiten 110 und 111 miteinander zu verbinden und einen Datenaustausch zwischen der Einrichtung 200 und dem Netz 300 gemäß dem zugeordneten Berechtigungsmerkmal zu ermöglichen. In einer sehr einfachen Ausführungsform ist es somit bereits ausreichend, wenn die Verarbeitungseinheit lediglich wenigstens ein Schieberegister und wenigstens einen Vergleicher umfasst. Das wenigstens eine Schieberegister der Verarbeitungseinheit 120 ist dabei entsprechend der Taktfrequenz des Netzes 300 getaktet. Ferner ist der wenigstens eine Vergleicher dazu ausgebildet, den Inhalt eines Schieberegisters genau dann zu überprüfen, wenn sich darin ein Abschnitt eines von der Einrichtung 200 gesendeten Datentelegramms 220 befindet, welcher ein Identifikationsmerkmal als Absender- oder Zielangabe enthält.

Mit zunehmender Komplexität der zu überprüfenden Identifikationsmerkmale 125 und/oder zu überwachenden Berechtigungsmerkmale, bietet es sich an, ergänzend oder alternativ zu einem Schieberegister und/oder einem Vergleicher einen Prozessor innerhalb der Verarbeitungseinheit 120 einzusetzen.

Darüber hinaus verfügt der Verbinder 100 über eine Anzeigeeinrichtung 170, die zum einen anzeigt, wenn eine an das Netz 300 anzuschaltende Einrichtung 200 wenigstens ein nicht vorbestimmtes Identifikationsmerkmal 125, 225 besitzt, die zum anderen aber auch anzeigt, welches wenigstens eine vorbestimmte Identifikationsmerkmal 125 der an das Netz 300 anzuschaltenden Einrichtung 200 zugewiesen werden muss, damit ein Datenaustausch möglich ist.

Zum Beziehen der benötigten Betriebsspannung verfügt der Verbinder 100 des Weiteren über eine Schnittstelle 130, welche im dargestellten Beispiel als USB-Schnittstelle ausgeführt ist, so dass, verbunden über ein USB-Kabel, die Einrichtung 200 als Stromquelle dienen kann. Alternativ kann die Schnittstelle 130 aber auch derart ausgeführt sein, dass die Betriebsspannung zum Beispiel von einer internen Batterie oder einer externen Stromquelle bereitstellbar ist.

Zur Konfiguration des Verbinders 100, also für das Übertragen der festgelegten Identifikations- und Berechtigungsmerkmale auf den Speicher 140, ist der Verbinder 100 ferner mit einer Empfangseinrichtung 150 sowie einer Eingabeeinrichtung 160 ausgestattet, die jeweils mit dem Speicher 140 verbunden sind. Mittels der Eingabeeinrichtung 160 können die Konfigurationsdaten direkt am Verbinder 100 eingegeben werden. Die Empfangseinrichtung 150 ist derart ausgeführt, dass sie ferner mit der USB-Schnittstelle 130 sowie mit der Verbindungseinrichtungen 111 verbunden ist, wodurch der Verbinder 100 die Konfigurationsdaten auch von einer per USB-Kabel bzw. per Netzwerkkabel verbundenen Datenverarbeitungseinrichtung empfangen kann. Bei einer anderen als der hier dargestellten Ausführungsform, bei der der Verbinder 100 über eine Verbindungseinrichtung 111 für kabellose Verbindungen verfügt, kann der Verbinder 100 die Konfigurationsdaten auch kabellos, beispielsweise mittels Übertragungstechniken wie Bluetooth oder Wireless LAN, von einer Datenverarbeitungseinrichtung empfangen.

Die Figuren 2a und 2b zeigen einen erfindungsgemäßen Verbinder 100, mittels dem eine Datenverarbeitungseinrichtung 200 an ein Datenverarbeitungsnetz 300 angeschaltet ist.

Zu dem Netz 300 gehören mehrere Einrichtungen 310 bis 340, die unterschiedliche Dienste bereitstellen können. So können z. B. auf einer Einrichtung Daten gespeichert sein, die den anderen Einrichtungen in dem Netz 300 ebenfalls zur Verfügung stehen. Die Einrichtungen, Dienste und Daten werden nachfolgend auch allgemein als Ressourcen bezeichnet.

Jede der Einrichtungen 310 bis 340 in dem Netz 300 kann mehrere verschiedenartige Identifikationsmerkmale besitzen, beispielhaft ist die jeweilige IP-Adresse jeder Einrichtung dargestellt. So besitzt zum Beispiel die Einrichtung 310 die IP-Adresse 149.146.1.10, die Einrichtung 330 besitzt hingegen die 149.146.1.30 als IP-Adresse. Aus der Zeichnung wird deutlich, dass die IP-Adresse jeder Einrichtung nur jeweils einmal in dem Netz 300 vorkommt, so dass jede Einrichtung eindeutig identifiziert und adressiert werden kann.

Das Netz 300 ist ferner mit einem weiteren Netz verbunden. Da die beiden Netze unterschiedlichen Vertrauenstufen angehören, ist an der zentralen Verbindungsstelle zwischen den Netzen eine Firewall 305 installiert, die das Netz 300 und seine Ressourcen vor unerwünschten Zugriffen aus dem anderen Netz schützt, indem sie an dieser Stelle den Datenaustausch überprüft und gegebenenfalls verhindert.

Wird jedoch eine Einrichtung wie die Einrichtung 200 direkt an das hinter der Firewall 305 liegende Netz 300 selbst angeschaltet, dann kann die Firewall 305 keinen Schutz vor Gefahren für Netz 300 bieten, die von dieser Einrichtung 200 ausgehen können.

Erfindungsgemäß wird dieser Schutz aber bereits auf einfache Weise durch den Verbinder 100 gewährleistet, mittels dem die Einrichtung 200 an das Netz 300 angeschaltet ist.

Der Verbinder 100 ist im dargestellten Beispiel derart konfiguriert, dass die IP-Adresse 149.146.1.50, welche in dem Netz 300 sonst noch nicht vor kommt, das vorbestimmte Identifikationsmerkmal 125 bildet. Ferner ist diesem vorbestimmten Identifikationsmerkmal 125 ein Berechtigungsmerkmal zugeordnet, welches die Figuren 2a und 2b der einfacheren Darstellung wegen nicht zeigen, wonach der Datenaustausch zwischen der Einrichtung 200 und dem Netz 300 nur dann erlaubt ist, wenn die Einrichtung 200 das vorbestimmte Identifikationsmerkmal 125 besitzt.

In Figur 2a ist beispielhaft der Fall dargestellt, in dem die Einrichtung 200 die IP-Adresse 149.146.1.50 besitzt, so dass der Verbinder gemäß seiner Konfiguration den Datenaustausch mit dem Netz 300 gewährt.

In dem in Figur 2b dargestellten Fall hingegen besitzt die Einrichtung 200 die IP-Adresse 149.146.1.20, die ihr in einem anderen Netz, an das sie zuvor angeschaltet war, zugewiesen wurde. Diese gleiche IP-Adresse besitzt aber in dem Netz 300 bereits der Einrichtung 320. Entsprechend seiner Konfiguration verhindert der Verbinder 100 nun jeglichen Datenaustausch zwischen der Einrichtung 200 und dem Netz 300 und somit das mehrfache Auftreten der IP-Adresse 149.146.1.20 in dem Netz 300.

Bei einer anderen als der dargestellten Ausführungsform des Verbinders 100 ist es ferner möglich, Berechtigungsmerkmale noch spezieller festzulegen und somit bei der Einrichtung 200 nicht nur das Vorhandensein eindeutiger Identifikationsmerkmale 125, 225 sicherzustellen, sondern für die Einrichtung 200 den Datenaustausch nur mit bestimmten Ressourcen 310, ..., 340 in dem Netz 300 zu erlauben, wobei wenigstens ein Identifikationsmerkmal der jeweiligen Ressource 310, ..., 340 ebenfalls festzulegen ist.

Eine noch weitergehende Spezialisierung der Berechtigungsmerkmale kann ferner derart vorgenommen werden, dass für die Einrichtung 200 nur das Übertragen von bestimmten Kommandos innerhalb des Datenaustausch erlaubt ist, so dass auch das Senden eines falschen bzw. unerwünschten Kommandos verhindert werden kann.

Zur weiteren Vereinfachung der Konfiguration des Verbinders 100 können die Identifikationsmerkmale sowohl für eine an ein Netz 300 anzuschaltende Einrichtung 200 als für eine bestimmte Ressource 310, ..., 340 in dem Netz 300 jeweils separat oder gruppenweise festgelegt werden, so dass beispielsweise auch die Angabe eines IP-Adressbreiches anstelle von mehreren einzelnen aufeinanderfolgenden IP-Adressen möglich ist.

Schließlich kann der Verbinder 100 auch für eine an das Netz 300 angeschaltete Einrichtung 200, die wenigstens ein vorbestimmtes Identifikationsmerkmal 125, 225 besitzt, jeglichen weiteren Datenaustausch dem Netz 300 zumindest temporär blockieren, falls wiederholt erkannt wird, dass von der Einrichtung 200 aus Versuche unternommen werden, Daten mit wenigstens einer Ressource 310, ..., 340 in dem Netz 300 auszutauschen bzw. wenigstens ein bestimmtes Kommando zu übertragen, wobei dem vorbestimmten Identifikationsmerkmal 125 jedoch kein entsprechendes Berechtigungsmerkmal zugeordnet ist.

Bei dem Netz 300 kann es sich exemplarisch um das Netz einer Zelle im Bereich der automatisierten industriellen Fertigung handeln, durch das verschiedene Geräte oder Komponenten einer Anlage wie Industrie-PC oder Feldgeräte 310 bis 340 miteinander verbunden sind.

Für den Fall, dass Änderungen an dem bestehenden Netz 300 vorgenommen werden sollen, etwa durch den Austausch oder das Hinzufügen eines Gerätes 200, hat der Administrator des Netzes 300 mit Hilfe des erfindungsgemäßen Verbinders 100 nunmehr die Möglichkeit, auf einfache Weise das mehrfache Auftreten gleicher Identifikationsmerkmale in dem Netz 300 nach dem Anschalten eines neuen Gerätes 200 zu vermeiden. Ferner hat der Administrator mit Hilfe des erfindungsgemäßen Verbinders 100 auch die Möglichkeit, für ein neu an das Netz 300 anzuschaltendes Gerät 200 auf einfache Weise den Zugriff auf bestimmte Geräte oder Komponenten 310, ..., 340 in dem Netz 300 einzuschränken sowie nur die Übertragung bestimmter Kommandos zu gewähren, um Störungen durch ein versehentlich falsch gesendetes Kommando zu vermeiden.

Um einen erfindungsgemäßen Verbinder 100 entsprechend zu konfigurieren, kann der Administrator mittels einer einfachen Konfigurationssoftware die geeigneten Identifikations- und Berechtigungsmerkmale festlegen und anschließend zum Beispiel über ein USB-Kabel auf den Verbinder 100 übertragen. Diesen übergibt der Administrator dann beispielsweise einem Service-Techniker mit der Anweisung, einen Service-Laptop 200 nur unter Verwendung des Verbinders 100 an das Netz 300 anzuschalten.

## Patentansprüche

1. Verbinder zum Bereitstellen eines Zugangs zu einem Datenverarbeitungsnetz (300), insbesondere einem Multimaster-fähigen, Ethernet-basierten Datenverarbeitungsnetz (300) in der automatisierten industriellen Fertigung, für eine an das Netz (300) anzuschaltende Datenverarbeitungseinrichtung (200), umfassend zwei Verbindungseinrichtungen (110, 111), welche für eine Verbindung mit der Einrichtung (200) bzw. dem Netz (300) ausgebildet sind, **dadurch**
**gekennzeichnet, dass** der Verbinder mobil, d.h. ortsungebunden und transportabel, und zum Bereitstellen eines individuellen, dezentralen und gesicherten Zugangs zu einem Datenverarbeitungsnetz (300) ausgebildet ist, ferner umfassend: eine Verarbeitungseinheit (120), die dazu ausgebildet ist, nach Anschalten der Einrichtung (200) diese zunächst auf wenigstens ein vorbestimmtes Identifikationsmerkmal (125, 225) hin zu überprüfen und erst bei Erkennen wenigstens eines vorbestimmten Identifikationsmerkmals (125, 225) gemäß wenigstens einem, diesem Identifikationsmerkmal (125) zugeordneten Berechtigungsmerkmal die zwei Verbindungseinrichtungen (110, 111) miteinander zu verbinden und einen Datenaustausch zwischen der Einrichtung (200) und dem Netz (300) zu ermöglichen.

2. Verbinder nach Anspruch 1, wobei die Verarbeitungseinheit (120) wenigstens ein Schieberegister und wenigstens einen Vergleicher umfasst, und/oder wobei die Verarbeitungseinheit (120) einen Prozessor umfasst, und/oder wobei die Verarbeitungseinheit (120) ferner dazu ausgebildet ist, erst bei Erkennen wenigstens eines vorbestimmten Identifikationsmerkmals (125, 225) gemäß wenigstens einem, diesem Identifikationsmerkmal (125) zugeordneten Berechtigungsmerkmal den Datenaustausch zwischen der Einrichtung (200) und lediglich wenigstens einer bestimmten Ressource (310, ..., 340) in dem Netz (300), welche durch wenigstens ein Identifikationsmerkmal festgelegt ist, zu ermöglichen und/oder wobei die Verarbeitungseinheit (120) ferner dazu ausgebildet ist, erst bei Erkennen wenigstens eines vorbestimmten Identifikationsmerkmals (125, 225) gemäß wenigstens einem, diesem Identifikationsmerkmal (125) zugeordneten Berechtigungsmerkmal das Übertragen von lediglich wenigstens einem bestimmten Kommando innerhalb des Datenaustauschs zu ermöglichen.

3. Verbinder nach einem der Ansprüche 1 bis2, ferner umfassend eine Anzeigeeinrichtung (170) zum Anzeigen des Vorhandenseins wenigstens eines nicht vorbestimmten Identifikationsmerkmals (125, 225).

4. Verbinder nach Anspruch3, wobei die Anzeigeeinrichtung (170) ferner dazu ausgebildet ist, wenigstens ein vorbestimmtes Identifikationsmerkmal, (125) anzuzeigen.

5. Verbinder nach einem der Ansprüche 1 bis4, wobei die Verarbeitungseinheit (120) ferner dazu ausgebildet ist, bei einem wiederholten Erkennen eines versuchten Datenaustauschs mit wenigstens einer Ressource (310, ..., 340) in dem Netz (300) und/oder eines versuchten Übertragens von wenigstens einem Kommando, ausgehend von einer an das Netz (300) angeschalteten Einrichtung (200), die wenigstens ein vorbestimmtes Identifikationsmerkmal (125, 225) besitzt, welchem jedoch kein entsprechendes Berechtigungsmerkmal zugeordnet ist, jeglichen weiteren Datenaustausch zwischen der Einrichtung (200) und dem Netz (300) zumindest temporär zu blockieren, und/oder wobei die Verarbeitungseinheit (120) ferner dazu ausgebildet ist, als Identifikationsmerkmale von Datenverarbeitungseinrichtungen (200, 310, ..., 340) MAC- und/oder IP-Adressen und/oder Namen zu verarbeiten und/oder wobei die Verbindungseinrichtung (111) für eine kabelgebundene oder kabellose Verbindung mit dem Netz (300) ausgebildet ist.

6. Verbinder nach einem der Ansprüche 1 bis 5, ferner umfassend eine Schnittstelle (130), insbesondere eine USB-Schnittstelle, über welche die benötigte Betriebsspannung von einer intern oder extern direkt angebundenen Stromquelle oder einer extern indirekt angebundenen Stromquelle, insbesondere einer Datenverarbeitungseinrichtung, bereitstellbar ist.

7. Verbinder nach einem der Ansprüche 1 bis6, ferner umfassend einen Speicher (140), in welchem wenigstens ein vorbestimmtes Identifikationsmerkmal (125) sowie wenigstens ein dem Identifikationsmerkmal (125) zugeordnetes Berechtigungsmerkmal gespeichert sein kann, in Abhängigkeit welcher die Verarbeitungseinheit (120) den Datenaustausch ermöglicht.

8. Verbinder nach Anspruch7, ferner umfassend eine Empfangseinrichtung (150) zum Empfangen von vorbestimmten Identifikationsmerkmalen (125) und den Identifikationsmerkmalen (125) zugeordneten Berechtigungsmerkmalen von einer externen Einrichtung, wobei die Empfangseinrichtung (150) mit dem Speicher (140), der Schnittstelle (130) und/oder der Verbindungseinrichtung (111) verbunden sein kann.

9. Verbinder nach einem der Ansprüche 7 oder 8, ferner umfassend eine Eingabeeinrichtung (160) zum Eingeben von vorbestimmten Identifikationsmerkmalen (125) und den Identifikationsmerkmalen (125) zugeordneten Berechtigungen, wobei die Eingabeeinrichtung (160) mit dem Speicher (140) verbunden sein kann.

10. Verfahren zum Konfigurieren eines Verbinders nach einem der Ansprüche 1 bis9, die folgenden Verfahrensschritte umfassend:
Festlegen von wenigstens einem eindeutigen Identifikationsmerkmal (125) für eine an ein Netz (300) anzuschaltende Einrichtung (200); und
Zuordnen von wenigstens einem bestimmten Berechtigungsmerkmal zu dem wenigstens einen Identifikationsmerkmal (125), sowie
Übertragen dieser Konfigurationsdaten auf den Verbinder.

11. Verfahren nach Anspruch10, wobei der Schritt des Zuordnens von wenigstens einem bestimmten Berechtigungsmerkmal das Zuordnen von wenigstens einem eindeutigen Identifikationsmerkmal für wenigstens eine bestimmte Ressource (310, ..., 340) in dem Netz (300) umfasst.

12. Verfahren nach einem der Ansprüche 10 oder 11, wobei der Schritt des Zuordnens von wenigstens einem Berechtigungsmerkmal das Zuordnen von wenigstens einem bestimmten Kommando umfasst, und/oder wobei sowohl die Identifikationsmerkmale (125) für eine an ein Netz (300) anzuschaltende Einrichtung (200) als auch die Identifikationsmerkmale für eine bestimmte Ressource (310, ..., 340) in dem Netz (300) jeweils separat oder gruppenweise festgelegt werden, und/oder wobei als Identifikationsmerkmale MAC-und/oder IP-Adressen und/oder Namen festgelegt werden.

13. Verfahren zum Bereitstellen eines Zugangs zu einem Datenverarbeitungsnetz (300), insbesondere einem Multimaster-fähigen, Ethernet-basierten Datenverarbeitungsnetz (300) in der automatisierten industriellen Fertigung für eine an das Netz (300) anzuschaltende Datenverarbeitungseinrichtung (200),
**dadurch gekennzeichnet, dass** ein individueller, dezentraler und gesicherter Zugang zu einem Datenverarbeitungsnetz (300) bereitgestellt wird, die folgenden Verfahrensschritte umfassend: Bereitstellen eines Verbinders zumindest nach Anspruch 1;
Verbinden des Verbinder an einer beliebigen Stelle mit dem Netz (300) und der Einrichtung (200);
Auslesen von wenigstens einem die Einrichtung (225) identifizierenden Merkmal aus zumindest dem ersten Datentelegramm (220), welches von der Einrichtung (200) ausgesendet wurde;
Vergleichen des wenigstens einen ausgelesenen Identifikationsmerkmals (225) mit wenigstens einem vorbestimmten Identifikationsmerkmal (125); und bei Erkennen einer Übereinstimmung Gewähren des Datenaustauschs zwischen der Einrichtung (200) und dem Netz (300) gemäß dem wenigstens einen dem vorbestimmten Identifikationsmerkmal (125) zugeordneten Berechtigungsmerkmal.

14. Verfahren nach Anspruch 13, wobei der Schritt des Auslesen ferner das Auslesen von wenigstens einem eine bestimmte Ressource (310, ..., 340) in dem Netz (300) identifizierenden Merkmal umfasst; und wobei der Schritt des Gewährens das Gewähren des Datenaustauschs zwischen der Einrichtung (200) und lediglich wenigstens einer bestimmten Ressource (310, ..., 340) in dem Netz (300), welche durch wenigstens ein Identifikationsmerkmal festgelegt ist, betrifft.

15. Verfahren nach Anspruch 14, wobei der Schritt des Auslesen ferner das Auslesen von wenigstens einem bestimmten Kommando umfasst; und wobei der Schritt des Gewährens das Gewähren des Übertragens lediglich von wenigstens einem bestimmten Kommando innerhalb des Datenaustauschs betrifft.
